(19) 

Europäisches Patentamt
European Patent Office
Office européen des brevets

(11) **EP 4 040 103 A1**

(12) **EUROPEAN PATENT APPLICATION**
published in accordance with Art. 153(4) EPC

(43) Date of publication:
**10.08.2022 Bulletin 2022/32**

(21) Application number: **19947816.5**

(22) Date of filing: **02.10.2019**

(51) International Patent Classification (IPC):
**G01B 11/00** (2006.01)

(52) Cooperative Patent Classification (CPC):
**G01B 11/00**

(86) International application number:
**PCT/JP2019/038979**

(87) International publication number:
**WO 2021/064912 (08.04.2021 Gazette 2021/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **FUJITSU LIMITED**
**Kawasaki-shi, Kanagawa 211-8588 (JP)**

(72) Inventor: **YOSHIMURA, Kazuhiro**
**Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **CORRECTION METHOD, CORRECTION PROGRAM, AND INFORMATION PROCESSING SYSTEM**

(57)     An information processing device generates a distance image on the basis of measurement data of a 3D sensor. The information processing device specifies a plurality of first pixels corresponding to a point group of a contour of an object from among pixels included in the distance image. The information processing device specifies a plurality of second pixels included in a predetermined range from the plurality of first pixels from among the pixels included in the distance image. The information processing device corrects first coordinate information of a first point group corresponding to the plurality of first pixels in the measurement data on the basis of second coordinate information of a second point group corresponding to the plurality of second pixels. The information processing device outputs coordinate information of a point group configuring the object including the first point group of which the first coordinate information is corrected.

FIG. 2

EP 4 040 103 A1

**Description**

TECHNICAL FIELD

The present invention relates to a correction method or the like.

BACKGROUND ART

There is a technique for measuring a three-dimensional point group of an object using a distance measuring device such as a laser sensor and recognizing a posture or the like of the object. In the following description, the laser sensor that measures a three-dimensional point group of an object is simply referred to as a "sensor". Information regarding the three-dimensional point group measured by the sensor is used for various types of processing in subsequent stages.

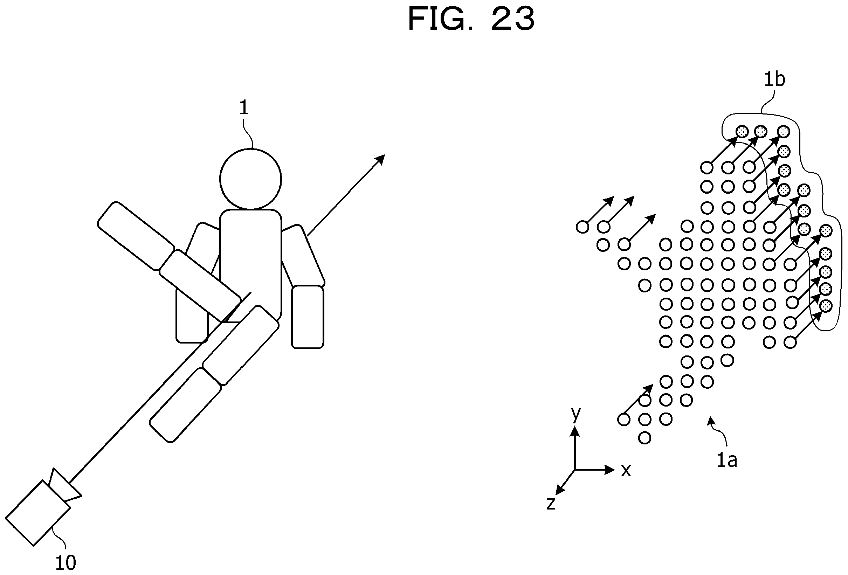

Here, when the three-dimensional point group of the object is measured by the sensor, edge noise is generated in a position deeper than an actual position in the depth direction in a contour portion of the object. FIG. 23 is a diagram for explaining an example of the edge noise. As illustrated in FIG. 23, when a sensor 10 measures a three-dimensional point group of an object 1, a three-dimensional point group 1a is measured. The three-dimensional point group 1a includes edge noise 1b.

The edge noise 1b is generated because laser light passes through an end of a contour portion of the object 1 at the time of measurement. That is, although the edge noise 1b is a point that indicates a contour of the object 1, a distance value in the depth direction is measured as a position farther than a distance value of the object 1, and the edge noise 1b is away from the three-dimensional point group 1a configuring in the object 1.

If the three-dimensional point group includes the edge noise, this deteriorates accuracy in subsequent processing, and accordingly, it is requested to deal with the edge noise. As the related art for dealing with the edge noise, for example, there are related arts 1 and 2.

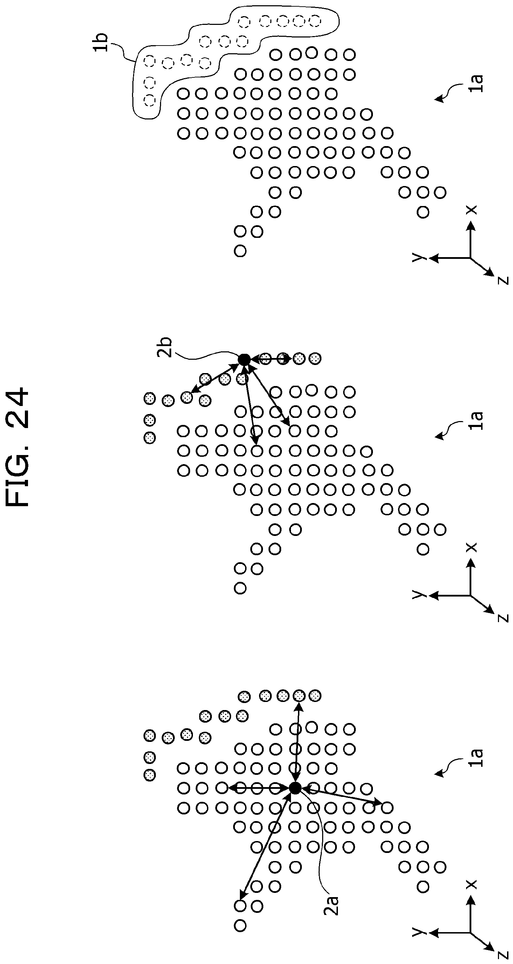

The related art 1 is a technique for deleting edge noise. FIG. 24 is a diagram for explaining the related art 1. The related art 1 calculates a point group density by obtaining a distance between each point included in the three-dimensional point group 1a and another point. For example, the point group density indicates the number of points included in a circle having a predetermined radius centered on a target point. The related art 1 leaves a point of which the point group density is equal to or more than a threshold and deletes a point of which the point group density is less than the threshold.

As illustrated in FIG. 24, a large number of points exist around a point 2a, and a point group density of the point 2a is equal to or more than the threshold. Therefore, the related art 1 leaves the point 2a. On the other hand, the number of points existing around a point 2b is small, and a point group density of the point 2b is less than the threshold. Therefore, the related art 1 deletes the point 2b. The related art 1 repeatedly executes the processing described above on each point of the three-dimensional point group 1a and deletes the edge noise 1b.

The related art 2 is a technique for correcting edge noise. The related art 2 captures two RGB stereo images and extracts a contour of an object on the basis of the stereo images. When a depth image of the object is measured by a sensor, the related art 2 specifies a contour position in the depth image according to a contour position of the object using the stereo images and corrects a value of the depth image with reference to a distance between two points across the contour.

Examples of the related art includes as follows: International Publication Pamphlet No. WO 2019/087404 and Japanese Laid-open Patent Publication No. 2012-79251.

SUMMARY

TECHNICAL PROBLEM

Although the related art 1 is a technique for deleting the point on the basis of the point group density, the number of three-dimensional point groups that can be used for subsequent processing is reduced. For example, in a case where a resolution of a sensor is low or in a case where a distance between an object and the sensor is long, the number of three-dimensional point groups is originally small. Moreover, the number of observable three-dimensional point groups corresponding to a portion where an area of the object that is visible from a 3D sensor is small (for example, human arm). Therefore, when the edge noise having contact with the contour of the object is simply removed, it is not possible to correctly maintain the contour and a shape of the object using only remaining point groups.

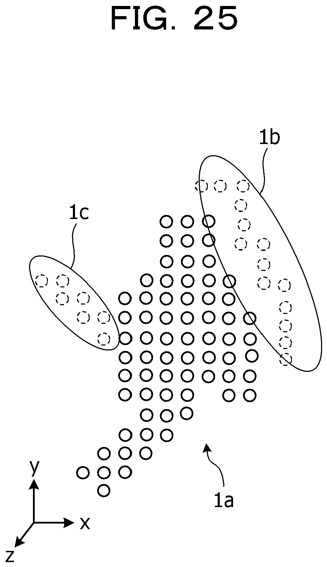

FIG. 25 is a diagram for explaining a problem of the related art 1. When the point is simply deleted on the basis of the point group density, not only the edge noise 1b but also a point group 1c are deleted. This is because the number of points around the point group 1c is small, and the point group density is less than the threshold. The deletion of the point group 1c that does not fall under the edge noise reduces the number of three-dimensional point groups 1a and limits points that can be used for the subsequent processing. Note that the point group 1c is a point group that corresponds to an arm of a human who is the object, and the original arm of the object is not maintained due to the deletion of the point group 1c.

Note that, because the related art 2 is the technique for correcting the edge noise, it is possible to maintain the number of three-dimensional point groups. However, as a premise, the contour of the object is specified according to the stereo image in addition to the depth image. Therefore, in a situation where it is not possible to use the stereo image, it is difficult to correct the edge noise.

In one aspect, an object of the present invention is to provide a correction method, a correction program, and an information processing system that can leave a point corresponding to edge noise among noise in a three-dimensional point group measured by a sensor as a point of a contour of an object.

SOLUTION TO PROBLEM

In a first idea, a computer executes the following processing. The computer generates a distance image on the basis of measurement data of a 3D sensor. The computer specifies a plurality of first pixels corresponding to a point group of a contour of an object among pixels included in the distance image. The computer specifies a plurality of second pixels included in a predetermined range from the plurality of first pixels among the pixels included in the distance image. The computer corrects first coordinate information of a first point group corresponding to the plurality of first pixels in the measurement data on the basis of second coordinate information of a second point group corresponding to the plurality of second pixels. The computer outputs coordinate information of a point group configuring the object including the first point group of which the first coordinate information is corrected.

ADVANTAGEOUS EFFECTS

A point corresponding to edge noise among noise of a three-dimensional point group measured by a sensor can be left as a point of a contour of an object.

BRIEF DESCRIPTION OF DRAWINGS

FIG. 1 is a diagram illustrating an example of an information processing system according to the present embodiment;
FIG. 2 is a diagram for explaining an example of processing of the information processing system according to the present embodiment;
FIG. 3 is a diagram for explaining an example of a background difference;
FIG. 4 is a diagram for explaining an example of correction processing;
FIG. 5 is a diagram illustrating an example of skeleton recognition;
FIG. 6 is a diagram illustrating an example of point group clustering;
FIG. 7 is a diagram illustrating an example of fitting;
FIG. 8 is a functional block diagram illustrating a configuration of an information processing device according to the present embodiment;
FIG. 9 is a diagram for explaining a focal distance fx in an x-axis direction;
FIG. 10 is a diagram for explaining a focal distance fy in a y-axis direction;
FIG. 11 is a diagram illustrating an example of a correction processing unit;
FIG. 12 is a diagram for explaining processing for generating a 2.5D image;
FIG. 13 is a diagram for explaining processing for specifying a first pixel;
FIG. 14 is a diagram illustrating a relationship between w and z used to calculate a distance ix;
FIG. 15 is a diagram illustrating a relationship between h and z used to calculate a distance iy;
FIG. 16 is a diagram (1) for explaining correction processing;
FIG. 17 is a diagram (2) for explaining the correction processing;
FIG. 18 is a diagram for explaining a relationship between points before correction and points after correction;
FIG. 19 is a flowchart (1) illustrating a processing procedure of the correction processing unit according to the present embodiment;
FIG. 20 is a flowchart (2) illustrating the processing procedure of the correction processing unit according to the present embodiment;
FIG. 21 is a diagram for explaining an effect of the present embodiment;
FIG. 22 is a diagram illustrating an example of a hardware configuration of a computer that implements functions similar to those of the information processing device;
FIG. 23 is a diagram for explaining an example of edge noise;
FIG. 24 is a diagram for explaining the related art 1; and
FIG. 25 is a diagram for explaining a problem of the related art 1.

DESCRIPTION OF EMBODIMENTS

Hereinafter, embodiments of a correction method, a correction program, and an information processing system according to the present invention will be described in detail with reference to the drawings. Note that the embodiments do not limit the present invention.

[Embodiment]

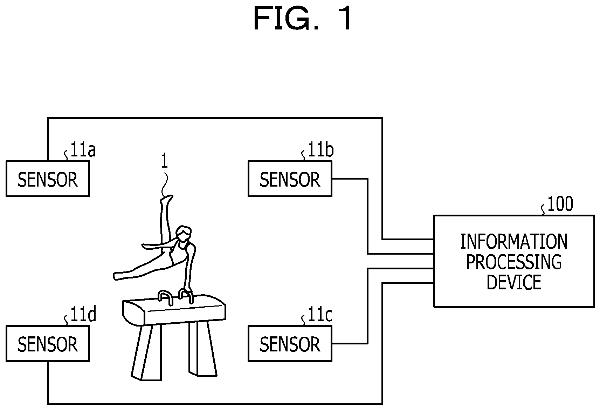

FIG. 1 is a diagram illustrating an example of an information processing system according to the present embodiment. As illustrated in FIG. 1, the information processing system includes sensors 11a to 11d and an information processing device 100. The sensors 11a to 11d and the information processing device 100 are wiredly or wirelessly connected.

As an example in the present embodiment, it is assumed that an object 1 perform a performance on an instrument. However, the present embodiment is not limited to this. For example, the object 1 may also perform a performance in a place where no instrument exists or may also perform an action other than the performance.

The sensor 11a is a measuring device (laser sensor) that measures a distance between a point group configuring the object 1 and the sensor 11a. The sensor 11a outputs data of a distance image that is a measurement result to the information processing device 100. For example, the sensor 11a performs raster scan and measures the distance between the point group and the sensor 11a.

Description regarding the sensors 11b to 11d is similar to the description regarding the sensor 11a. In the following description, the sensors 11a to 11d are collectively referred to as a "sensor 11".

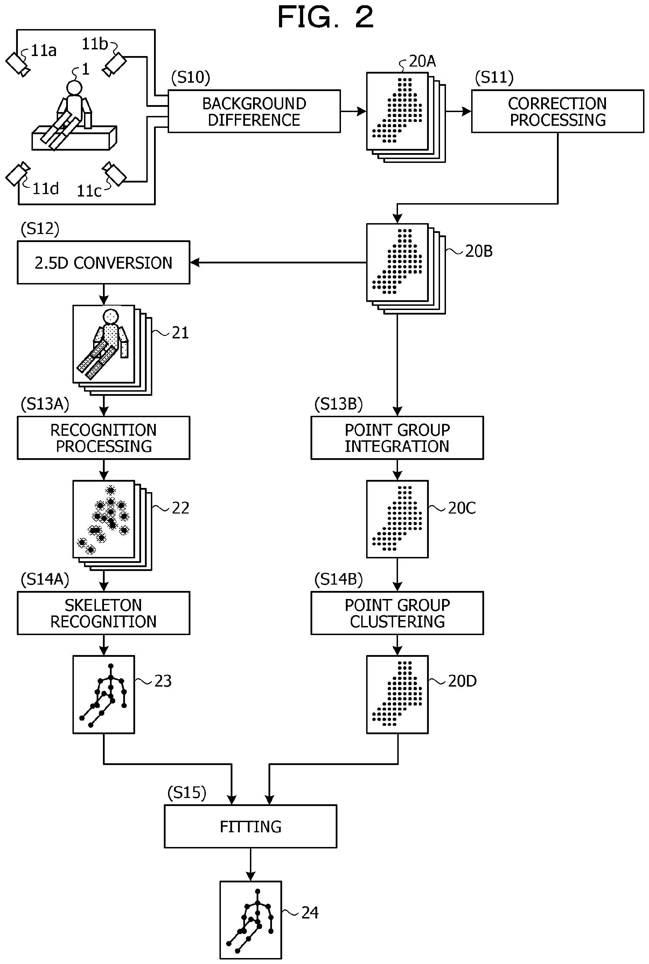

FIG. 2 is a diagram for explaining an example of processing of the information processing device according to the present embodiment. For example, the information processing device 100 executes processing in steps S10 to S15 to be described below.

Processing in step S10 (background difference) will be described. The information processing device 100 calculates a difference between a background image and the distance image acquired from the sensor 11 so as to remove background noise and generate data of the distance image from which the background noise is removed. The background image is a distance image measured by the sensor 11 in a situation where the object 1 does not exist.

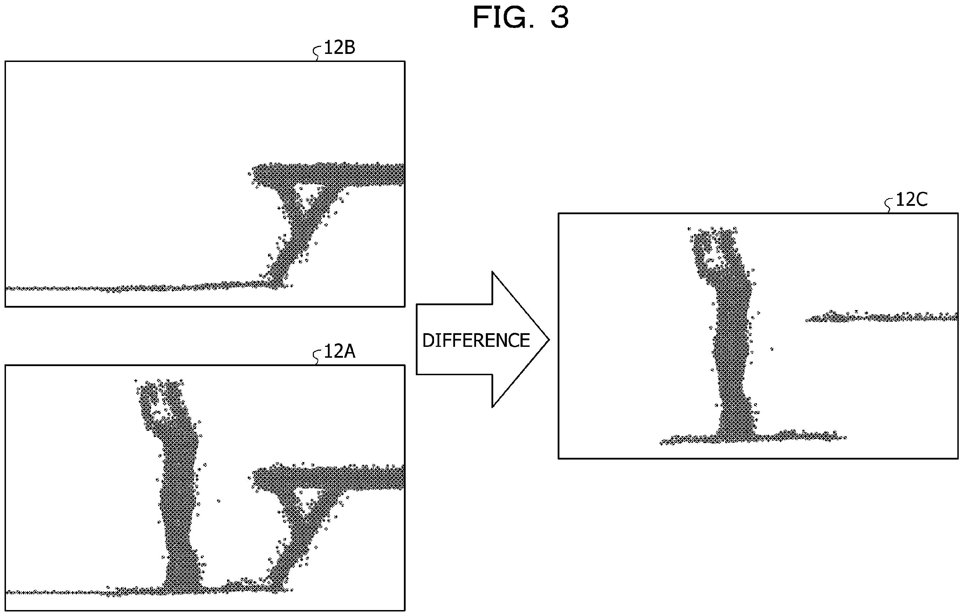

FIG. 3 is a diagram for explaining an example of a background difference. As illustrated in FIG. 3, the information processing device 100 calculates a difference between a background image 12B and a distance image 12A so as to generate a distance image 12C.

The information processing device 100 converts data of the distance image 12C into three-dimensional point group data 20A. The three-dimensional point group data 20A is data obtained by converting a relationship between a point included in the distance image 12C and a distance into a relationship between a point and coordinates in the three-dimensional orthogonal coordinate system. For example, the three-dimensional orthogonal coordinate system includes an x axis, a y axis, and a z axis, and the z axis is set as an axis in a depth direction of the sensor 11. In the following description, the coordinates in the three-dimensional orthogonal coordinate system are referred to as "three-dimensional coordinates".

Processing in step S11 (correction processing) will be described. The information processing device 100 corrects edge noise included in the three-dimensional point group data 20A so as to generate three-dimensional point group data 20B.

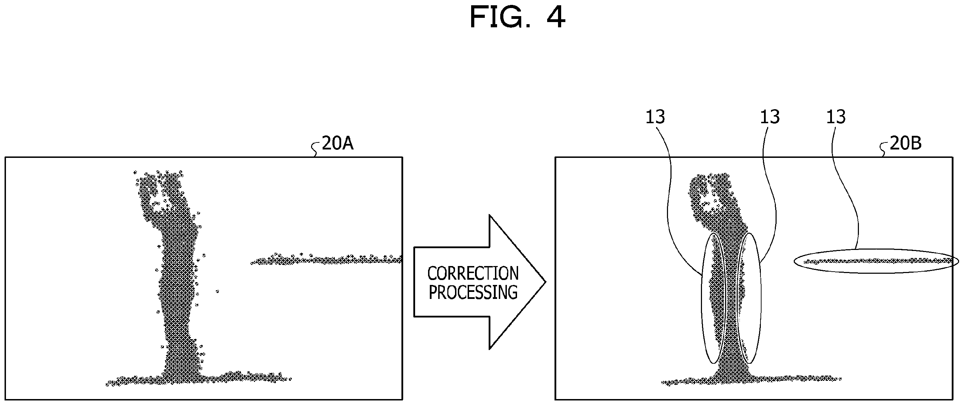

FIG. 4 is a diagram for explaining an example of the correction processing. As illustrated in FIG. 4, by executing the correction processing on the three-dimensional point group data 20A, the information processing device 100 generates the three-dimensional point group data 20B. When the three-dimensional point group data 20A is compared with the three-dimensional point group data 20B, coordinates of the edge noise are corrected to be close to a surface of the object or the instrument in a contour portion 13. The correction processing will be described later in detail.

Processing in step S12 (2.5 dimension (D) conversion) will be described. The information processing device 100 generates 2.5D image data 21 by projecting the three-dimensional point group data 20B on a two-dimensional map. Each pixel of the image data 21 is associated with each point group of the three-dimensional point group data 20B. A z axis value of the corresponding point is set to the pixel of the image data 21.

Processing in step S13A (recognition processing) will be described. The information processing device 100 generates a joint heatmap 22 by inputting the 2.5D image data 21 into a learning model that has been learned in advance. The joint heatmap 22 is information indicating a position of each joint of the object 1.

Processing in step S13B (point group integration) will be described. The information processing device 100 integrates the three-dimensional point group data 20B (a plurality of pieces of three-dimensional point group data 20B measured by each sensor 11 that is a plurality of pieces of three-dimensional point group data 20B on which the correction processing has been executed) and generates a single piece of three-dimensional point group data 20C.

Note that the information processing device 100 may also execute the processing in step S13A described above and the processing in step S13B in parallel.

Processing in step S14A (skeleton recognition) will be described. The information processing device 100 generates a skeleton recognition result 23 on the basis of the position of each joint illustrated in the joint heatmap 22. For example, the skeleton recognition result 23 is information in which the coordinates of the respective joints are connected.

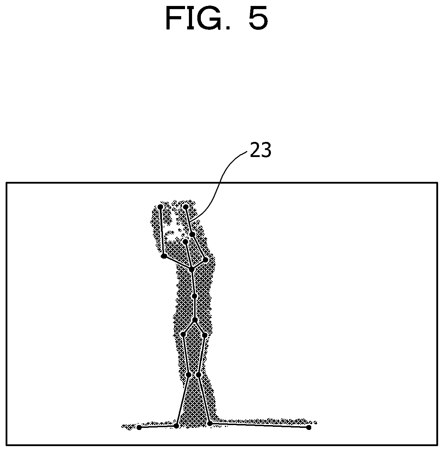

FIG. 5 is a diagram illustrating an example of the skeleton recognition. In the example illustrated in FIG. 5, the skeleton recognition result 23 combined with the three-dimensional point group data is illustrated. For example, when noise under the feet of the object 1 (noise of mat or the like) remains, skeleton positions of portions below the knees and toes are abnormal in the skeleton recognition result 23.

Processing in step S14B (point group clustering) will be described. The information processing device 100 classifies the three-dimensional point group data 20C into a plurality of clusters by performing the point group clustering on the three-dimensional point group data 20C. The information processing device 100 deletes a point group included in a cluster of which the number of points of the point group cluster is less than a threshold among the plurality of clusters as noise. Note that a point group included in a cluster of which not only the number of points of the point group cluster but also a volume of a polyhedron configured by the point group cluster are less than the thresholds may also be deleted as noise.

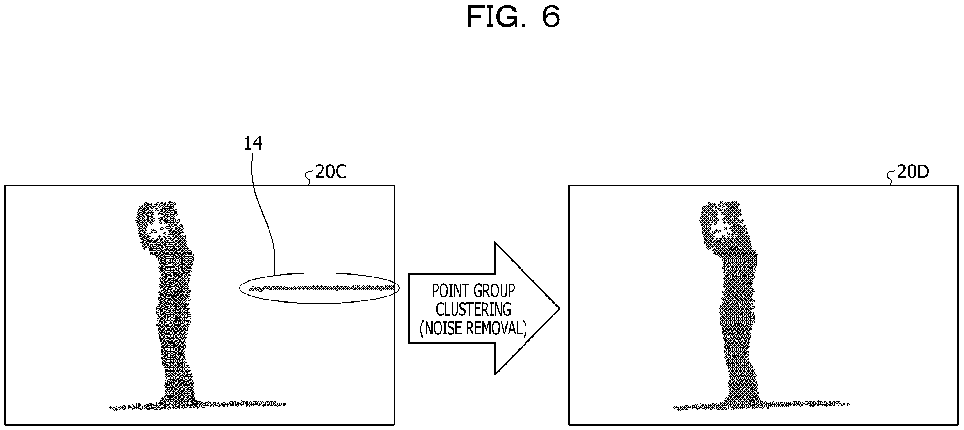

FIG. 6 is a diagram illustrating an example of the point group clustering. As illustrated in FIG. 6, by performing the point group clustering on the three-dimensional point group data 20C and removing noise 14, three-dimensional point group data 20D is generated.

Note that the information processing device 100 may also execute the processing in step S14A described above and the processing in step S14B in parallel.

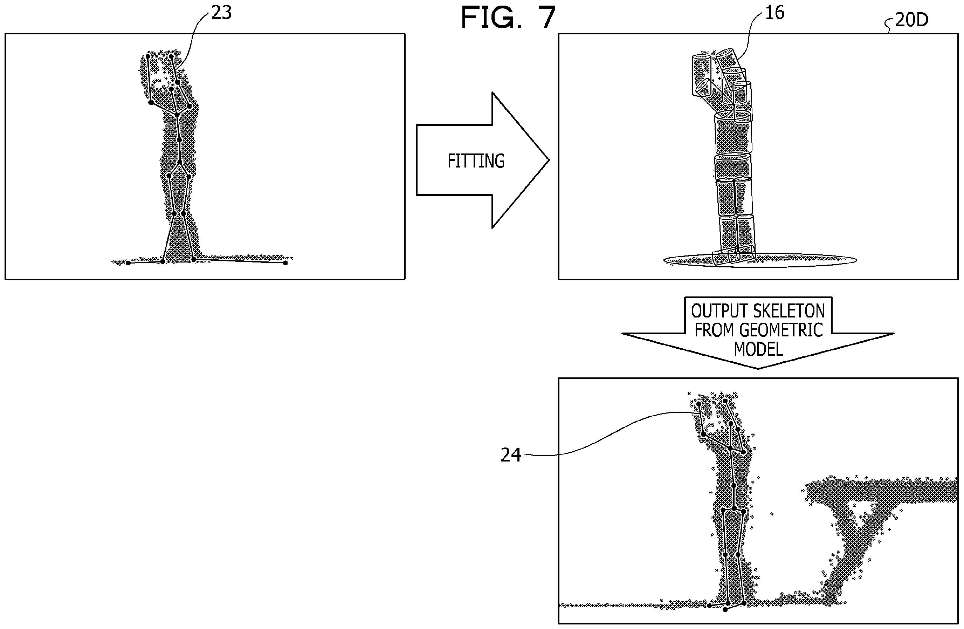

Processing in step S15 (fitting) will be described. FIG. 7 is a diagram illustrating an example of the fitting. As illustrated in FIG. 7, the information processing device 100 applies a cylindrical model 16 to the skeleton recognition result 23 described in step S14A and sets an initial position. A cylindrical model is data of a model that expresses each portion of the object 1 using a cylinder (or elliptical pillar or the like). The information processing device 100 slightly changes an angle of a connection portion of each cylinder of the cylindrical model 16 and performs adjustment (fitting) so that a distance between a surface of the cylindrical model and each point of the three-dimensional point group data 20D is shortened.

The information processing device 100 generates a skeleton model 24 in which shafts of the fitted cylindrical model 16 are connected.

The information processing device 100 repeatedly executes the processing in steps S10 to S15 each time when the data of the distance image is acquired from the sensor 11 and repeatedly executes the processing for generating the skeleton model 24. The information processing device 100 outputs the skeleton model 24 in time series and performs recognition, scoring, or the like of a technique in various competitions on the basis of a transition of the joint positions of the skeleton model 24 at the respective times.

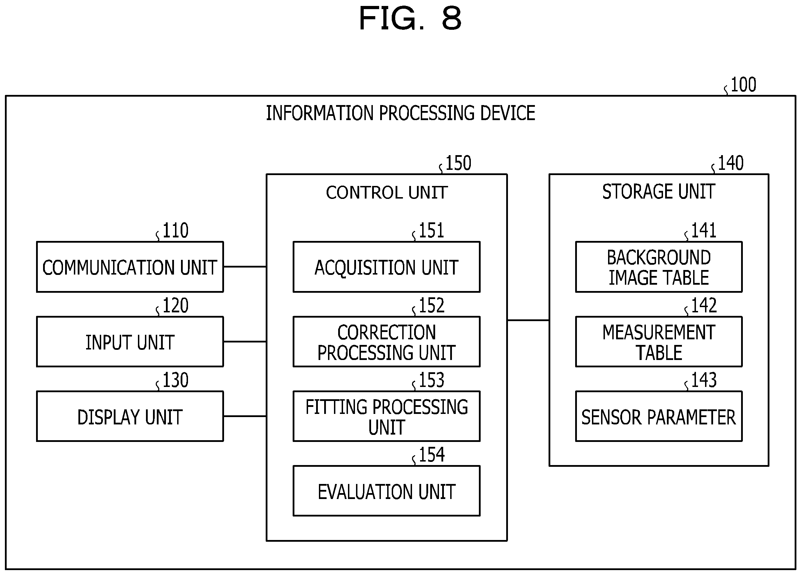

Next, an example of the configuration of the information processing device 100 illustrated in FIG. 1 will be described. FIG. 8 is a functional block diagram illustrating a configuration of an information processing device according to the present embodiment. As illustrated in FIG. 8, the information processing device 100 includes a communication unit 110, an input unit 120, a display unit 130, a storage unit 140, and a control unit 150.

The communication unit 110 is a processing unit that receives the data of the distance image from the sensor 11 illustrated in FIG. 1. The communication unit 110 outputs the received data of the distance image to the control unit 150. The communication unit 110 is an example of a communication device.

The input unit 120 is an input device that inputs various types of information to the information processing device 100. The input unit 120 corresponds to a keyboard, a mouse, a touch panel, or the like. For example, a user operates the input unit 120 and requests to display a display screen or the like.

The display unit 130 is a display device that displays information output from the control unit 150. For example, the display unit 130 displays technique recognition and scoring results or the like of various competitions. The display unit 130 corresponds to a liquid crystal display, an organic electroluminescence (EL) display, a touch panel, or the like.

The storage unit 140 includes a background image table 141, a measurement table 142, and a sensor parameter 143. The storage unit 140 corresponds to a semiconductor memory element such as a random access memory (RAM) or a flash memory (flash memory), or a storage device such as a hard disk drive (HDD).

The background image table 141 is a table that stores data of a background image (data of distance image) measured by each of the sensors 11a to 11d in a state where the object 1 does not exist.

The measurement table 142 is a table that stores the data of the distance image measured by each of the sensors 11a to 11d in a state where the object 1 exists.

The sensor parameter 143 includes parameters of the respective sensors 11a to 11d. For example, the sensor parameter 143 includes angles of view θx and θy of the x axis and the y axis and focal distances fx and fy of the x axis and the y axis. Furthermore, the sensor parameter 143 includes a width and a height.

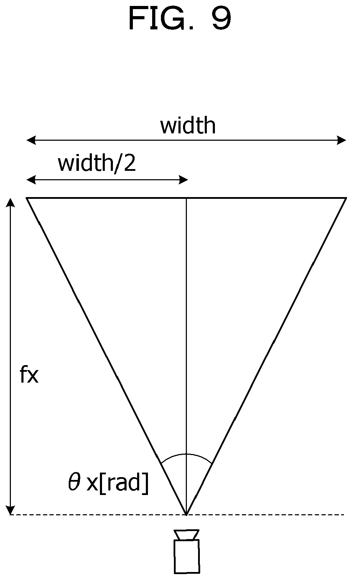

FIG. 9 is a diagram for explaining the focal distance fx in the x-axis direction. FIG. 9 illustrates a case where the sensor 11 is viewed from above. For example, a relationship between the focal distance fx and the angle of view θx is indicated by the formula (1). In the formula (1), the width is a preset width and corresponds to the number of pixels in the horizontal direction (i-axis direction) in a 2.5D image to be described later.

$$fx = width/(2 * tan (θx/2))...(1)$$

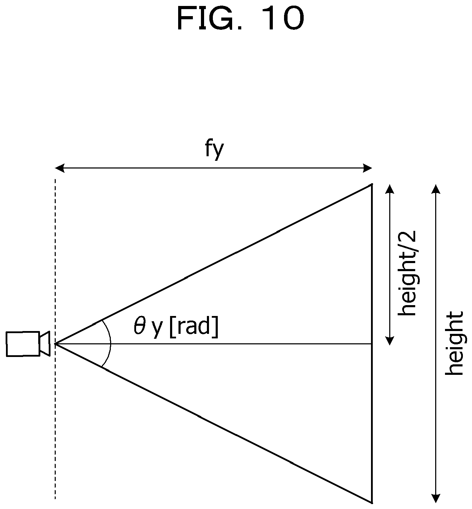

FIG. 10 is a diagram for explaining the focal distance fy in the y-axis direction. FIG. 10 illustrates a case where the sensor 11 is viewed from the side. For example, a relationship between the focal distance fy and the angle of view θy is indicated by the formula (2). In the formula (2), the height is a preset height and corresponds to the number of pixels in the vertical direction (j-axis direction) in the 2.5D image to be described later.

$$fy = height/(2 * tan (θy/2))...(2)$$

The description returns to the description of FIG. 8. The control unit 150 includes an acquisition unit 151, a correction processing unit 152, a fitting processing unit 153, and an evaluation unit 154. The control unit 150 is implemented by a central processing unit (CPU) or a micro processing unit (MPU), or hard-wired logic such as an application specific integrated circuit (ASIC) or a field programmable gate array (FPGA), or the like.

The acquisition unit 151 is a processing unit that acquires the data of the distance image from the sensor 11 via the communication unit 110. The acquisition unit 151 stores the data of the distance image in the measurement table 142. In a case where the data of the distance image is stored in the measurement table 142, the acquisition unit 151 divides each piece of the data of the distance images measured by the sensors 11a to 11d in a distinguishable manner and stores the data in the measurement table 142.

The correction processing unit 152 is a processing unit that performs the background difference described in step S10 in FIG. 2 and executes the correction processing described in step S11.

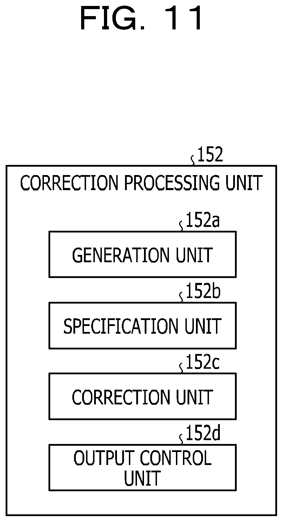

FIG. 11 is a diagram illustrating an example of the correction processing unit. As illustrated in FIG. 11, the correction processing unit 152 includes a generation unit 152a, a specification unit 152b, a correction unit 152c, and an output control unit 152d.

Here, the correction processing unit 152 executes the correction processing on each of the distance images measured by the sensors 11a to 11d. However, for convenience of description, a case will be described where the distance image measured by the sensor 11a is corrected. Processing for correcting each of the distance images measured by the sensors 11b to 11d is similar to the processing for correcting the distance image measured by the sensor 11a.

As described with reference to FIG. 3, the generation unit 152a is a processing unit that calculates the distance image 12C that is the difference between the distance image 12A measured by the sensor 11a and the background image 12B corresponding to the sensor 11a. The generation unit 152a acquires data of the distance image 12A from the measurement table 142. The generation unit 152a acquires data of the background image 12B from the background image table 141.

Data of the distance image 12C is data indicating a relationship between each point included in a point group and a distance. The generation unit 152a converts the data of the distance image 12C into three-dimensional point group data using a conversion table (not illustrated) that defines a relationship between a distance and three-dimensional coordinates. The three-dimensional point group data associates the point included in the point group and the three-dimensional coordinates. The generation unit 152a outputs the three-dimensional point group data to the specification unit 152b. The three-dimensional point group data corresponds to "measurement data".

The generation unit 152a repeatedly executes the processing described above each time when the data of the distance image 12A measured by the sensor 11a is stored in the measurement table 142.

The specification unit 152b is a processing unit that generates a 2.5D image on the basis of the three-dimensional point group data and specifies a plurality of first pixels corresponding to a point group of a contour of the object 1 from among pixels included in the 2.5D image. The 2.5D image corresponds to a "distance image".

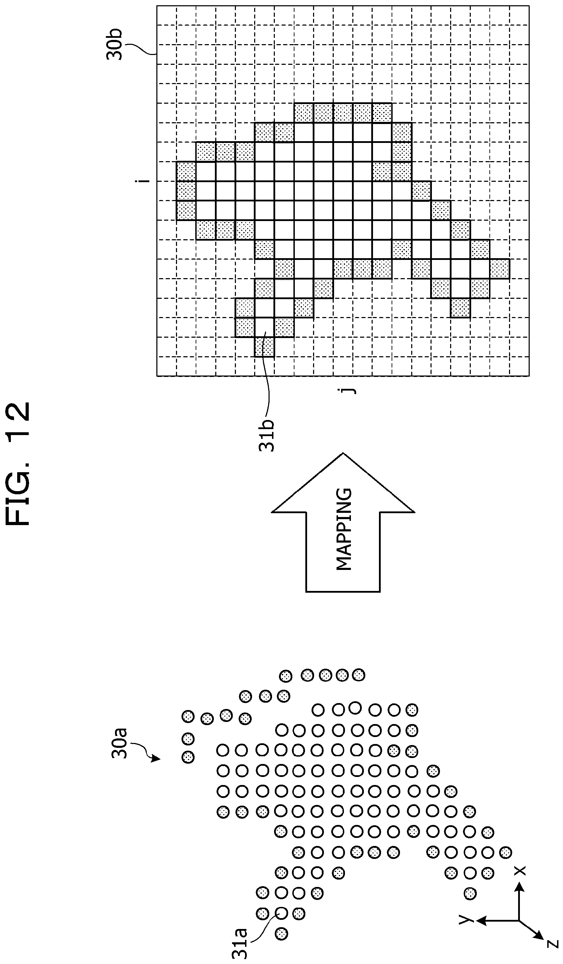

First, an example of processing for generating a 2.5D image by the specification unit 152b will be described. FIG. 12 is a diagram for explaining the processing for generating a 2.5D image. As illustrated in FIG. 12, the specification unit 152b maps each point of three-dimensional point group data 30a to each pixel of a two-dimensional (i axis, j axis) 2.5D image 30b. A z axis value of a corresponding point is set to the pixel of the 2.5D image 30b. In FIG. 12, illustration of some point groups included in the three-dimensional point group data 30a is omitted.

For example, a pixel corresponding to a point 31a is a pixel 31b, and a z axis value of the point 31a is set to the pixel 31b. In the following description, the z axis value is appropriately referred to as a "distance value". A distance value Z corresponding to a position (i, j) in the 2.5D image is defined by the formula (3). A range of the value of i is "0 to width". A range of the value of j is "0 to height".

$$depth[i][j] = Z...(3)$$

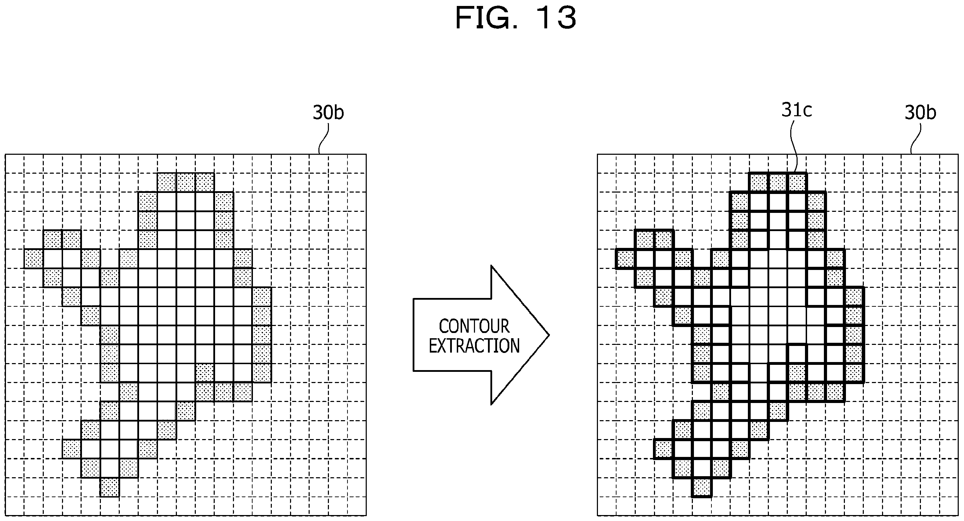

Subsequently, the processing for specifying the first pixel by the specification unit 152b will be described. FIG. 13 is a diagram for explaining the processing for specifying the first pixel. The specification unit 152b scans the 2.5D image 30b and extracts a contour portion 31c from the plurality of pixels, to which the distance value is set, included in the 2.5D image 30b. A pixel included in the contour portion 31c corresponds to the "first pixel". A width of the contour portion may also be given in advance as a constant.

The specification unit 152b outputs data of the 2.5D image 30b and data of the contour portion 31c to the correction unit 152c. The specification unit 152b outputs data, in which each point of the three-dimensional point group data 30a is associated with each pixel of the 2.5D image 30b, to the correction unit 152c.

The specification unit 152b repeatedly executes the processing described above each time when the three-dimensional point group data is acquired from the generation unit 152a.

The correction unit 152c is a processing unit that specifies a plurality of second pixels included in a predetermined range from the first pixel among the pixels included in the 2.5D image and corrects first coordinate information of a first point group corresponding to the plurality of first pixels with second coordinate information of a second point group corresponding to the plurality of second pixels. For example, the correction unit 152c sequentially executes processing for calculating the focal distances fx and fy, processing for calculating distances ix and iy, and correction processing.

The processing for calculating the focal distances fx and fy will be described. The correction unit 152c calculates the focal distance fx on the basis of the angle of view θx stored in the sensor parameter 143, the width, and the formula (1). The correction unit 152c calculates the focal distance fy on the basis of the angle of view θy stored in the sensor parameter 143, the height, and the formula (2).

Note that the focal distances fx and fy may also be calculated in advance, and the focal distances fx and fy calculated in advance may also be included in the sensor parameter 143. In a case where the focal distances fx and fy are calculated in advance, the correction unit 152c skips the processing for calculating the focal distances fx and fy.

Subsequently, the processing for calculating the distances ix and iy will be described. Here, the distance ix indicates a distance of a single pixel along the i axis of the 2.5D image. Here, the distance iy indicates a distance of a single pixel along the j axis of the 2.5D image.

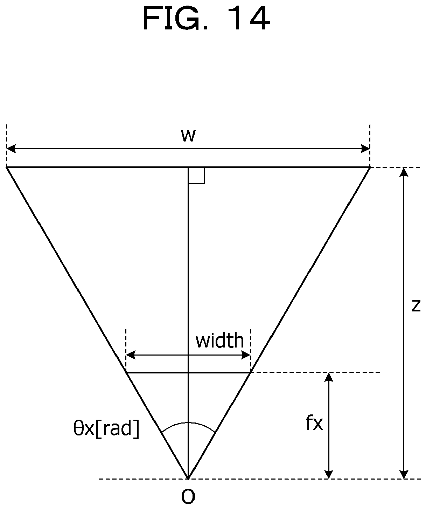

The correction unit 152c calculates the distance ix on the basis of the formulas (4) and (5). FIG. 14 is a diagram illustrating a relationship between w and z used to calculate the distance ix. The reference w indicates a width of a three-dimensional space that can be measured by the sensor 11. The reference z indicates a depth of the three-dimensional space that can be measured by the sensor 11. A value of z may also be preset.

$$w = 2 \times \tan(\theta x/2)/z...(4)$$

$$ix = w/width...(5)$$

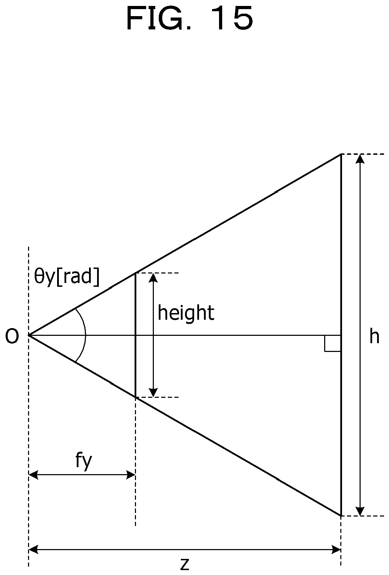

The correction unit 152c calculates the distance iy on the basis of the formulas (6) and (7). FIG. 15 is a diagram illustrating a relationship between h and z used to calculate the distance iy. The reference h indicates a height of the three-dimensional space that can be measured by the sensor 11. The reference z indicates a depth of the three-dimensional space that can be measured by the sensor 11. A value of z may also be preset.

$$h = 2 \times \tan(\theta x/2)/z...(6)$$

$$iy = w/height...(7)$$

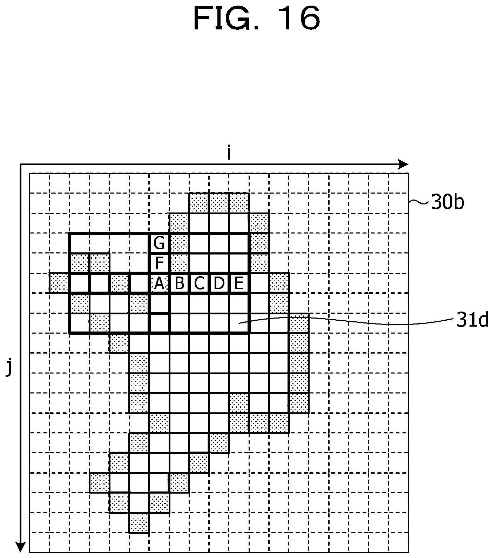

Next, the correction processing will be described. FIG. 16 is a diagram (1) for explaining the correction processing. The correction unit 152c selects one of the plurality of first pixels as a "target pixel" on the basis of the 2.5D image 30b and the contour portion 31c. The correction unit 152c specifies a pixel included in radii rx and ry centered on the target pixel. It is assumed that values of the radii rx and ry be preset.

A point of the three-dimensional point group data 30a corresponding to the target pixel of the 2.5D image 30b is a target point.

In the example illustrated in FIG. 16, the target pixel is a pixel A. Each of the values of the radii rx and ry is set to "0.04 m". The distance ix calculated according to the formulas (4) and (5) is set to "0.001 m". The distance iy calculated according to the formulas (6) and (7) is set to "0.002 m". The values of the radii rx and ry can be appropriately changed. For example, the values of the radii rx and ry may also be "0.05 m".

Here, a value obtained by adding respective distances of pixels B, C, D, and E in the i-axis direction is the radius rx "0.04 m". Furthermore, a value obtained by adding respective distances of pixels F and G in the j-axis direction is the radius ry "0.004 m". Therefore, the correction unit 152c sets a range 31d of the radii rx and ry centered on the pixel A. Pixels included in the range 31d are set as peripheral pixels. A point of the three-dimensional point group data corresponding to the peripheral pixel is set as a peripheral point.

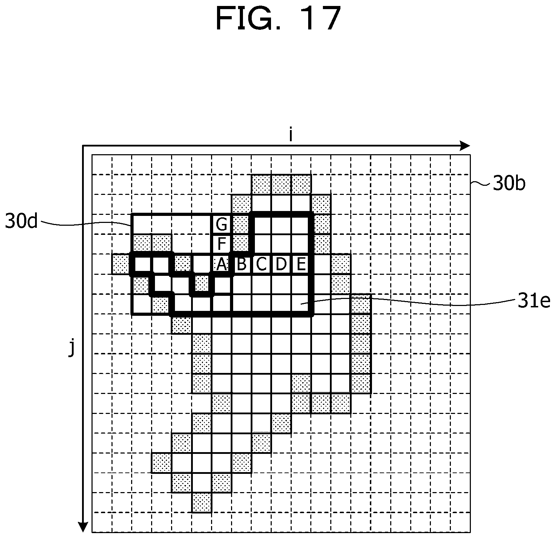

The correction unit 152c specifies a plurality of pixels in a non-contour portion from among the peripheral pixels. FIG. 17 is a diagram (2) for explaining the correction processing. In FIG. 17, the plurality of pixels in the non-contour portion among the pixels included in the range 31d is a pixel included in a range 31e.

The correction unit 152c corrects three-dimensional coordinates of a point corresponding to the pixel A on the basis of three-dimensional coordinates corresponding to the plurality of pixels in the non-contour portion. Here, the three-dimensional coordinates of the point (target point) corresponding to the pixel A before being corrected are set as "pc [A].x, pc [A].y, pc [A].z". The three-dimensional coordinates of the point (target point) corresponding to the pixel A after being corrected are set as "pc [A].x', pc [A].y', pc [A].z'"

The correction unit 152c specifies an absolute value of the z axis value corresponding to each of the plurality of pixels in the non-contour portion and sets the minimum absolute value among the specified absolute values to the value of pc [A].z'. Alternatively, the correction unit 152c calculates an average value of the z axis values corresponding to the plurality of pixels in the non-contour portion and sets the calculated average value to the value of pc [A].z'.

The correction unit 152c calculates pc [A].x' and pc [A].y' on the basis a ratio of pc [A].z' and pc [A].z. For example, the correction unit 152c calculates pc [A].x' on the basis of the formula (8). The correction unit 152c calculates pc [A].y' on the basis of the formula (9).

$$pc\ [A].x' = pc\ [A].x \times pc\ [A].z/pc\ [A].z'...(8)$$

$$pc\ [A].y' = pc\ [A].y \times pc\ [A].z/pc\ [A].z'...(9)$$

The correction unit 152c selects an unselected first pixel as a target pixel from among the plurality of first pixels and repeatedly executes the processing described above so as to repeatedly execute the processing for correcting the three-dimensional coordinates of the target point corresponding to the plurality of first pixels included in the contour portion 31c. By the processing by the correction unit 152c, three-dimensional coordinates of the edge noise included in the three-dimensional point group data 30a are corrected. The correction unit 152c outputs the three-dimensional point group data 30a of which the three-dimensional coordinates have been corrected to the output control unit 152d.

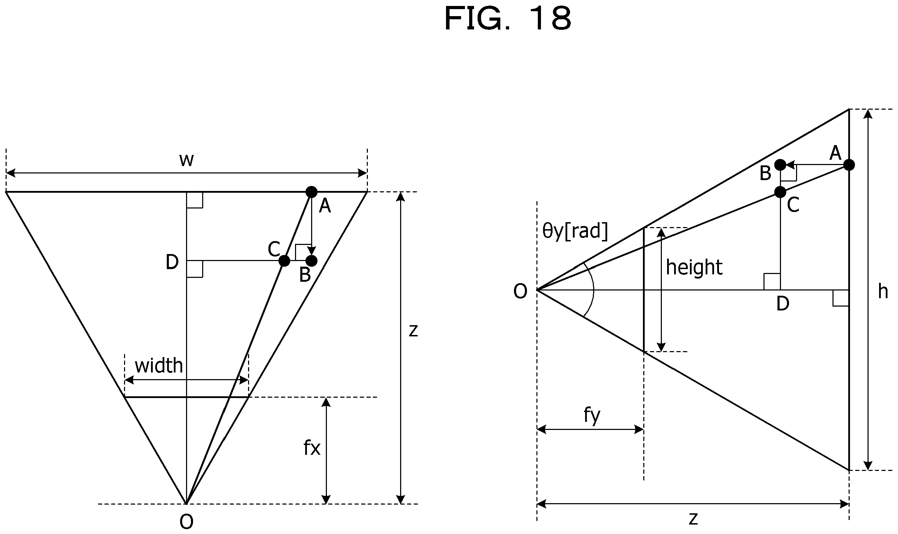

FIG. 18 is a diagram for explaining a relationship between points before correction and points after correction. The diagram on the left side of FIG. 18 is a diagram of the points viewed from above. The diagram on the right side of FIG. 18 is a diagram of the points viewed from the side. A point before being corrected is set as a point A. A point after being corrected is set as a point C. A point of which only the z axis value has been corrected is set as a point B. The reference O indicates a position of the sensor 11. The coordinates of the points A, B, and C are as described below.

$$A = (x,\ y,\ z)$$

$$B = (x,\ y,\ z')$$

$$C = (x',\ y',\ z')$$

Because the point B of which only the z axis value of the point A has been corrected does not exist on a straight line OA between the sensor position O and the point A, the point B is not corrected to an appropriate position. It is correct to correct the point B to a position of the point C that exists on the straight line OA.

From a similarity relationship between a triangle ABC and a triangle OCD, each of the formulas (10), (11), and (12) is derived. The formula (12) corresponds to the formula (8).

$$x{:}z = x'{:}z' ...(10)$$

$$z \times x' = x \times z' ...(11)$$

$$x' = x \times z'/z ...(12)$$

From the similarity relationship between the triangle ABC and the triangle OCD, each of the formulas (13), (14), and (15) is derived. The formula (15) corresponds to the formula (9).

$$y{:}z = y'{:}z' ...(13)$$

$$z \times y' = y \times z' ...(14)$$

$$y' = y \times z'/z ...(15)$$

The output control unit 152d is a processing unit that outputs the corrected three-dimensional point group data acquired from the correction unit 152c to the fitting processing unit 153.

By the way, the specification unit 152b described above may generate a 2.5D image again on the basis of the three-dimensional point group data corrected by the correction unit 152c and specify the first pixel included in the contour portion, and the correction unit 152c may also repeatedly execute the processing for correcting the first pixel again L times. L is preset.

The description returns to the description of FIG. 8. The fitting processing unit 153 is a processing unit that performs each of the 2.5D conversion, the recognition processing, the point group integration, the skeleton recognition, the point group clustering, and the fitting described in S12 to S15 in FIG. 2. The fitting processing unit 153 outputs the skeleton model 24 to the evaluation unit 154. The fitting processing unit 153 repeatedly executes the processing described above each time when the corrected three-dimensional point group data is acquired from the output control unit 152d and outputs the skeleton model 24.

The evaluation unit 154 is a processing unit that acquires the skeleton model 24 in time series and evaluates a performance of the object 1 on the basis of a transition of each joint coordinate of the skeleton model. For example, the evaluation unit 154 evaluates the performance of the object 1 using a table in which transition of each joint coordinate, a type of a technique, whether or not the technique is established are defined and outputs an evaluation result to the display unit 130 and displays the evaluation result on the display unit 130.

Note that the evaluation of the technique performed by the evaluation unit 154 can be applied to various scoring competitions. The scoring competitions include trampoline, swim diving, figure skating, karate style, ballroom dance, snowboarding, skateboarding, ski aerial, and surfing, in addition to the gymnastics. Furthermore, the evaluation may also be applied to form check or the like of classical ballet, ski jump, mogul air and turn, baseball, and basketball. Furthermore, the evaluation may also be applied to competitions such as kendo, judo, wrestling, or sumo. Moreover, the evaluation may also be used to evaluate whether or not a weight lifting barbell has been lifted.

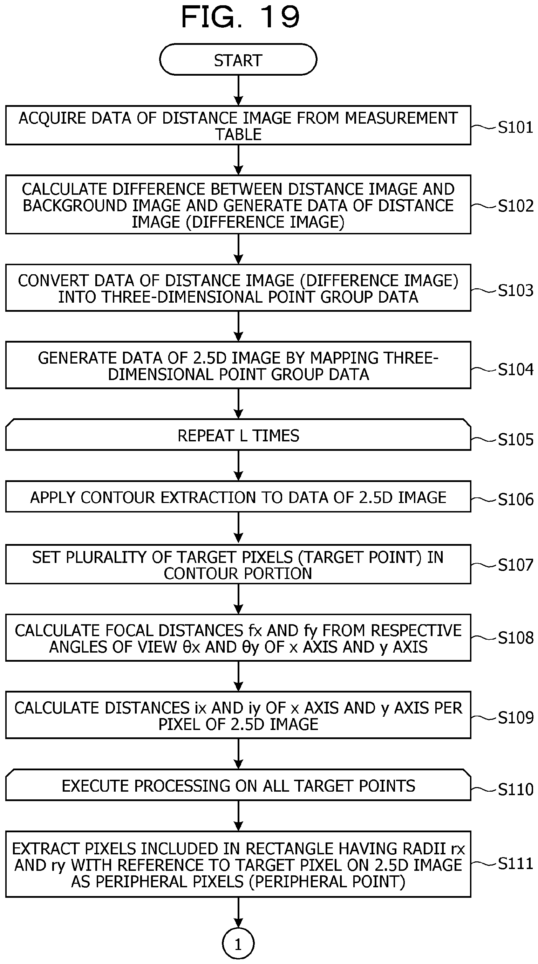

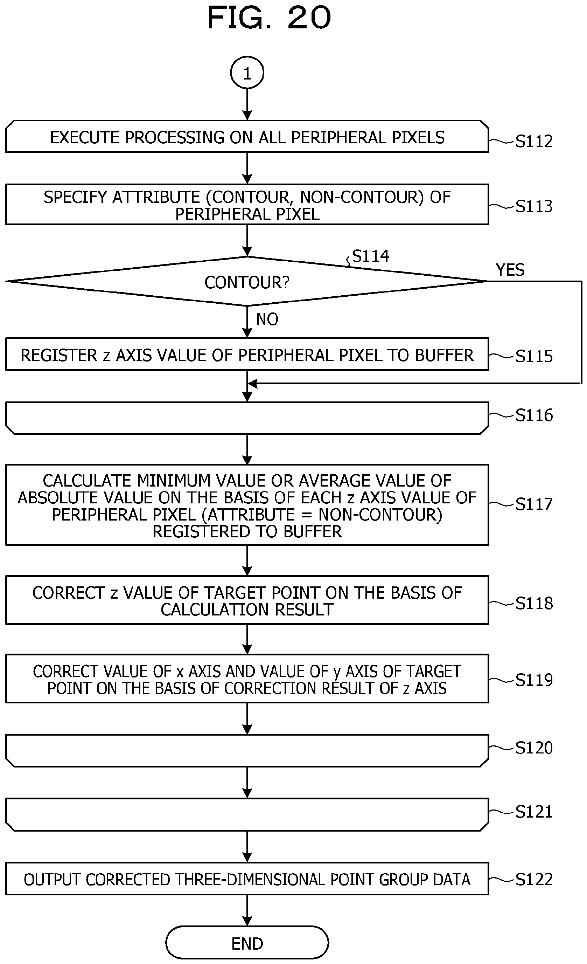

Next, an example of a processing procedure of the correction processing unit 152 included in the information processing device 100 according to the present embodiment will be described. FIGs. 19 and 20 are flowcharts illustrating a processing procedure of a correction processing unit according to the present embodiment. FIG. 19 will be described. The generation unit 152a of the correction processing unit 152 acquires data of a distance image from the measurement table 142 (step S101).

The generation unit 152a calculates a difference between the distance image and a background image and generates data of the distance image (difference image) (step S102). The generation unit 152a converts the data of the distance image (difference image) into three-dimensional point group data (step S103).

The specification unit 152b of the correction processing unit 152 generates data of a 2.5D image by mapping the three-dimensional point group data (step S104). The correction processing unit 152 repeatedly executes the processing from step S105 to step S121 L times.

The specification unit 152b applies the contour extraction to the data of the 2.5D image (step S106). The correction unit 152c of the correction processing unit 152 sets a target pixel in the contour portion (step S107). The correction unit 152c calculates focal distances fx and fy from respective angles of view θx and θy of the x axis and the y axis (step S108). The correction unit 152c calculates distances ix and iy of the x axis and the y axis per pixel of the 2.5D pixel (step S109).

The correction unit 152c repeatedly executes the processing from step S110 to step S120 on all target points. The correction unit 152c extracts pixels included in a rectangle having radii rx and ry with reference to the target pixel on the 2.5D image as peripheral pixels (step S111) and proceeds to the processing in step S112 in FIG. 20.

The description proceeds to FIG. 20. The correction unit 152c repeatedly executes the processing from step S112 to step S116 on all the peripheral pixels. The correction unit 152c specifies an attribute (contour, non-contour) of the peripheral pixel (step S113).

The correction unit 152c specifies an attribute (contour, non-contour) of the peripheral pixel (step S113). In a case where the attribute of the peripheral pixel is the contour (step S114, Yes), the correction unit 152c proceeds to step S116.

On the other hand, in a case where the attribute of the peripheral pixel is not the contour (step S114, No), the correction unit 152c registers a z axis value of the peripheral pixel to a buffer (not illustrated) (step S115).

The correction unit 152c calculates a minimum value or an average value of an absolute value on the basis of each z axis value of the peripheral pixel (attribute = non-contour) registered to the buffer (not illustrated) (step S117). The correction unit 152c corrects a z value of the target point on the basis of the calculation result (minimum value or average value of absolute value) (step S118).

The correction unit 152c corrects the value of the x axis and the value of the y axis of the target point on the basis of the correction result of the z axis (step S119). The output control unit 152d of the correction processing unit 152 outputs the corrected three-dimensional point group data to the fitting processing unit 153 (step S122).

Next, effects of the information processing device 100 according to the present embodiment will be described. The information processing device 100 specifies a plurality of first pixels corresponding to the contour in the 2.5D image and specifies a plurality of second pixels included in a predetermined range from the first pixel from among the pixels included in the 2.5D image. The information processing device 100 corrects three-dimensional coordinates of a first point group corresponding to the plurality of first pixels with three-dimensional coordinates of a second point group corresponding to the plurality of second pixels. As a result, a point corresponding to the edge noise among noise of the three-dimensional point group measured by the sensor can be left as a point of the contour of the object.

Furthermore, because the point corresponding to the edge noise among the noise of the three-dimensional point group can be left as the point of the contour of the object, accuracy of fitting to the corrected three-dimensional point group data can be improved.

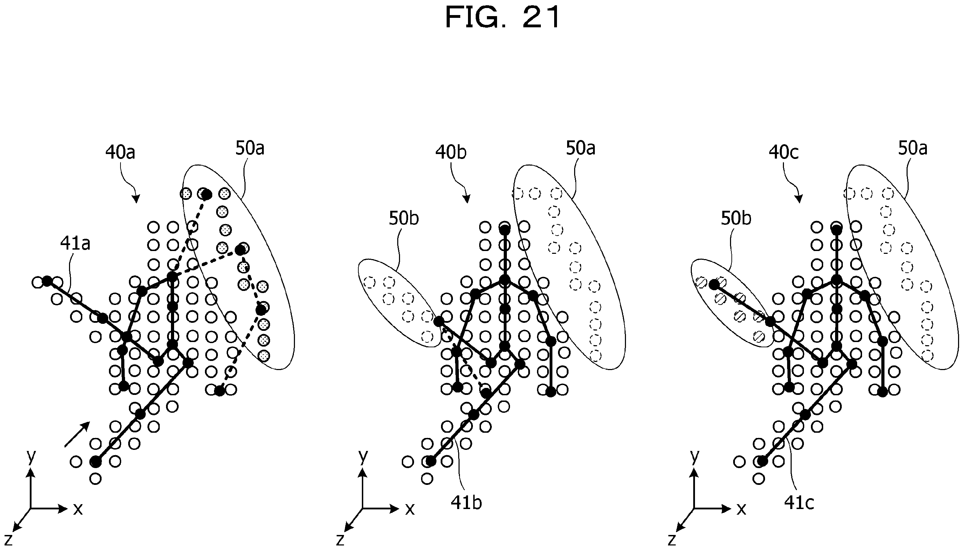

FIG. 21 is a diagram for explaining effects of the present embodiment. A point group 40a in FIG. 21 indicates three-dimensional point group data that is not corrected. A skeleton model in a case where fitting is performed on the point group 40a is a skeleton model 41a. In the skeleton model 41a, accuracy of a joint position of the head or the left arm is deteriorated due to an effect of noise 50a.

A point group 40b in FIG. 21 is, for example, a point group obtained by removing the noise from the three-dimensional point group data according to the related art 1. The noise 50a and a point group 50b are deleted from the point group 40b. The removal of the noise 50a is as expected. However, because the point group 50b is a point group corresponding to a leg portion of the object 1, a point group of a foot of the object 1 disappears. Therefore, a skeleton model in a case where fitting is performed on the point group 40b is a skeleton model 41b. In the skeleton model 41b, because the point group of the foot disappears from the point group 40b, accuracy of the foot joint position is deteriorated.

For example, a point group 40c in FIG. 21 is a point group from which noise is removed by the point group clustering in FIG. 2 after being corrected by the correction processing unit 152. The point group 50b is not removed from the point group 40b, and the noise 50a is removed. The correction processing unit 152 can leave the point group of the foot of the object 1. Therefore, a skeleton model in a case where fitting is performed on the point group 40c is a skeleton model 41c. The skeleton model 41c accurately reproduces each joint position of the object 1.

The information processing device 100 specifies a pixel that is included in the radii rx and ry with reference to the target pixel and does not correspond to the point group of the contour from among the pixels included in the 2.5D image as the second pixel. The information processing device 100 calculates the minimum value or the average value of the absolute value on the basis of the z axis values of the plurality of second pixels and corrects the three-dimensional coordinates (z axis value) of the target point according to the calculated value. As a result, it is possible to correct the z axis value of the edge noise to be closer to the coordinates of the point group of the object 1.

The information processing device 100 corrects the three-dimensional coordinates (x axis value, y coordinate value) of the target point on the basis of the corrected z axis value. As a result, it is possible to correct the corrected three-dimensional coordinates of the target point to a more appropriate position.

The information processing device 100 repeatedly executes the processing for generating a 2.5D image again on the basis of the three-dimensional point group data corrected by the correction unit 152c and specifying the first pixel included in the contour portion by the specification unit 152b and the processing for correcting the first pixel again by the correction unit 152c L times. As a result, it is possible to correct the edge noise existing around the object 1.

By the way, in the present embodiment, in a case where the correction processing unit 152 extracts the contour, two pixels from the outermost pixel are extracted as the contour from among the plurality of pixels to which the distance value is set in the 2.5D image 30b. However, the present embodiment is not limited to this, and the number of pixels may also be three.

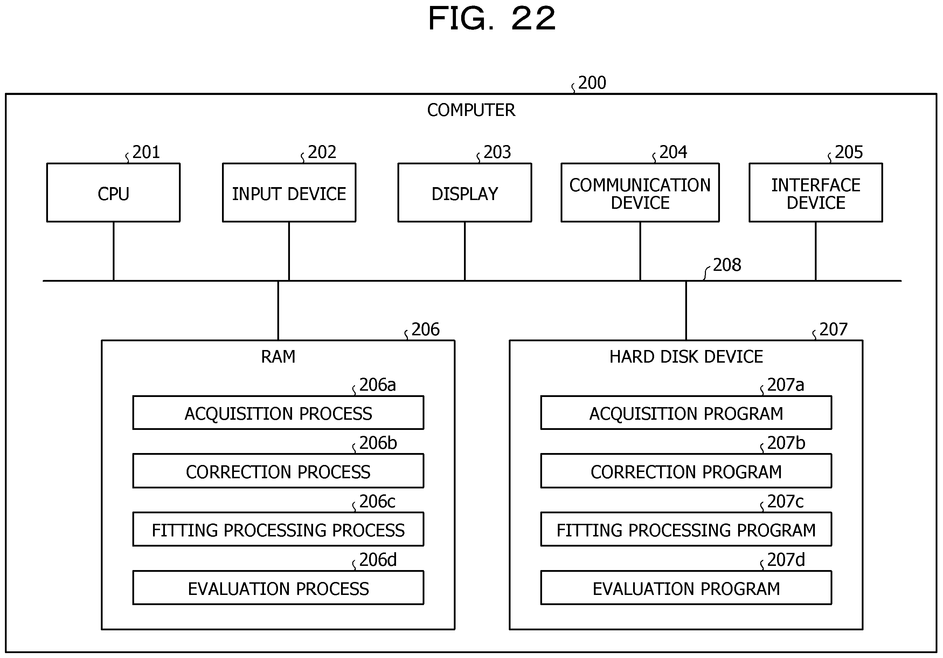

Next, an example of a hardware configuration of a computer that implements functions similar to the information processing device 100 described in the above embodiment will be described. FIG. 22 is a diagram illustrating an example of a hardware configuration of a computer that implements functions similar to the information processing device.

As illustrated in FIG. 22, a computer 200 includes a CPU 201 that executes various types of calculation processing, an input device 202 that receives input of data from a user, and a display 203. Furthermore, the computer 200 includes a communication device 204 that receives a measurement result from a sensor and an interface device 205 connected with various devices. The computer 200 includes a RAM 206 that temporarily stores various types of information, and a hard disk device 207. Then, each of the devices 201 to 207 is connected to a bus 208.

The hard disk device 207 includes an acquisition program 207a, a correction program 207b, a fitting processing program 207c, and an evaluation program 207d. The CPU 201 reads the acquisition program 207a, the correction program 207b, the fitting processing program 207c, and the evaluation program 207d and loads the programs to the RAM 206.

The acquisition program 207a functions as an acquisition process 206a. The correction program 207b functions as a correction process 206b. The fitting processing program 207c functions as a fitting processing process 206c. The evaluation program 207d functions as an evaluation process 206d.

Processing of the acquisition process 206a corresponds to the processing of the acquisition unit 151. Processing of the correction process 206b corresponds to the processing of the correction processing unit 152. The correction processing unit 152 includes the generation unit 152a, the specification unit 152b, the correction unit 152c, and the output control unit 152d. Processing of the evaluation process 206a corresponds to the processing of the evaluation unit 207d.

Note that each of the programs 207a to 207d does not need to be stored in the hard disk device 207 beforehand. For example, each of the programs is stored in a "portable physical medium" such as a flexible disk (FD), a compact disc read only memory (CD-ROM), a digital versatile disc (DVD) disk, a magneto-optical disk, or an integrated circuit (IC) card to be inserted in the computer 200. Then, the computer 200 may also read and execute each of the programs 207a to 207d.

REFERENCE SIGNS LIST

    10, 11a, 11b, 11c, 11d sensor
    100 information processing device
    110 communication unit
    120 input unit
    130 display unit
    140 storage unit
    141 background image table
    142 measurement table
    143 sensor parameter
    150 control unit
    151 acquisition unit
    152 correction processing unit
    152a generation unit
    152b specification unit
    152c correction unit
    152d output control unit
    153 fitting processing unit
    154 evaluation unit

**Claims**

1. A computer-implemented correction method comprising:

   generating a distance image on the basis of measurement data of a 3D sensor;
   specifying a plurality of first pixels that corresponds to a point group of a contour of an object from among pixels included in the distance image;
   specifying a plurality of second pixels included in a predetermined range from the plurality of first pixels from among the pixels included in the distance image;
   correcting first coordinate information of a first point group that corresponds to the plurality of first pixels in the measurement data on the basis of second coordinate information of a second point group that corresponds to the plurality of second pixels; and
   outputting coordinate information of a point group that configures the object that includes the first point group of which the first coordinate information is corrected.

2. The computer-implemented correction method according to claim 1, wherein
   the processing that specifies the second pixel specifies a pixel that is included in a predetermined range from the plurality of first pixels and does not correspond to a point group of the contour from among the pixels included in the distance image as the second pixel.

3. The computer-implemented correction method according to claim 2, wherein
   the correction processing corrects the first coordinate information on the basis of a minimum value of an absolute value of the second coordinate information or an average value of the second coordinate information.

4. The computer-implemented correction method according to claim 3, wherein
   the correction processing corrects a third coordinate from among a first coordinate, a second coordinate, and the third coordinate in a three-dimensional orthogonal coordinate system included in the first coordinate information and further corrects the first coordinate and the second coordinate on the basis of a ratio between the third coordinate before being corrected and the corrected third coordinate.

5. The computer-implemented correction method according to claim 4, wherein
   the processing that generates the distance image on the basis of the point group that configures the object, the processing that specifies the first pixel, the processing that specifies the second pixel, and the processing that corrects the first coordinate are repeatedly executed each time when the first coordinate information is corrected.

6. A correction program including instructions which, when the correction program is executed by a computer, cause the computer to perform processing comprising:

   generating a distance image on the basis of measurement data of a 3D sensor;
   specifying a plurality of first pixels that corresponds to a point group of a contour of an object from among pixels included in the distance image;
   specifying a plurality of second pixels included in a predetermined range from the plurality of first pixels from among the pixels included in the distance image;
   correcting first coordinate information of a first point group that corresponds to the plurality of first pixels in the measurement data on the basis of second coordinate information of a second point group that corresponds to the plurality of second pixels; and
   outputting coordinate information of a point group that configures the object that includes the first point group of which the first coordinate information is corrected.

7. The correction program according to claim 6, wherein
   the processing that specifies the second pixel specifies a pixel that is included in a predetermined range from the plurality of first pixels and does not correspond to a point group of the contour from among the pixels included in the distance image as the second pixel.

8. The correction program according to claim 7, wherein
   the correction processing corrects the first coordinate information on the basis of a minimum value of an absolute value of the second coordinate information or an average value of the second coordinate information.

**9.** The correction program according to claim 8, wherein
the correction processing corrects a third coordinate from among a first coordinate, a second coordinate, and the third coordinate in a three-dimensional orthogonal coordinate system included in the first coordinate information and further corrects the first coordinate and the second coordinate on the basis of a ratio between the third coordinate before being corrected and the corrected third coordinate.

**10.** The correction program according to claim 9, wherein
the processing that generates the distance image on the basis of the point group that configures the object, the processing that specifies the first pixel, the processing that specifies the second pixel, and the processing that corrects the first coordinate are repeatedly executed each time when the first coordinate information is corrected.

**11.** An information processing system comprising:

a 3D sensor; and
an information processing device, wherein
the 3D sensor outputs measurement data to the information processing device, and
the information processing device includes
a specification unit that generates a distance image on the basis of the measurement data received from the 3D sensor and specifies a plurality of first pixels that corresponds to a point group of a contour of an object from among pixels included in the distance image,
a correction unit that specifies a plurality of second pixels included in a predetermined range from the plurality of first pixels from among the pixels included in the distance image in the measurement data and corrects first coordinate information of a first point group that corresponds to the plurality of first pixels on the basis of second coordinate information of a second point group that corresponds to the plurality of second pixels, and
an output control unit that outputs coordinate information of a point group that configures the object that includes the first point group of which the first coordinate information is corrected.

**12.** The information processing system according to claim 11, wherein
the correction unit specifies a pixel that is included in a predetermined range from the plurality of first pixels and does not correspond to a point group of the contour from among the pixels included in the distance image as the second pixel.

**13.** The information processing system according to claim 12, wherein
the correction unit corrects the first coordinate information on the basis of a minimum value of an absolute value of the second coordinate information or an average value of the second coordinate information.

**14.** The information processing system according to claim 13, wherein
the correction unit corrects a third coordinate from among a first coordinate, a second coordinate, and the third coordinate in a three-dimensional orthogonal coordinate system included in the first coordinate information and further corrects the first coordinate and the second coordinate on the basis of a ratio between the third coordinate before being corrected and the corrected third coordinate.

**15.** The information processing system according to claim 14, wherein
the specification unit repeatedly executes the processing that generates the distance image and the processing that specifies the first pixel, and the correction unit repeatedly executes the processing that specifies the second pixel and the processing that corrects the first coordinate on the basis of the point group that configures the object each time when the first coordinate information is corrected.

EP 4 040 103 A1

# FIG. 1

14

# FIG. 2

FIG. 3

EP 4 040 103 A1

# FIG. 4

CORRECTION PROCESSING

20A

20B

13  13  13

EP 4 040 103 A1

# FIG. 5

23

FIG. 6

POINT GROUP
CLUSTERING
(NOISE REMOVAL)

20C

20D

14

EP 4 040 103 A1

# FIG. 7

FITTING

OUTPUT SKELETON FROM GEOMETRIC MODEL

# FIG. 8

INFORMATION PROCESSING DEVICE — 100

CONTROL UNIT — 150

STORAGE UNIT — 140

COMMUNICATION UNIT — 110

INPUT UNIT — 120

DISPLAY UNIT — 130

ACQUISITION UNIT — 151

CORRECTION PROCESSING UNIT — 152

FITTING PROCESSING UNIT — 153

EVALUATION UNIT — 154

BACKGROUND IMAGE TABLE — 141

MEASUREMENT TABLE — 142

SENSOR PARAMETER — 143

EP 4 040 103 A1

# FIG. 9

width

width/2

fx

$\theta$ x[rad]

# FIG. 10

# FIG. 11

# FIG. 12

# FIG. 13

CONTOUR
EXTRACTION

# FIG. 14

# FIG. 15

# FIG. 16

# FIG. 17

# FIG. 18

EP 4 040 103 A1

# FIG. 19

```
┌─────────────┐
│    START    │
└─────────────┘
       │
       ▼
```

ACQUIRE DATA OF DISTANCE IMAGE FROM MEASUREMENT TABLE ── S101

CALCULATE DIFFERENCE BETWEEN DISTANCE IMAGE AND BACKGROUND IMAGE AND GENERATE DATA OF DISTANCE IMAGE (DIFFERENCE IMAGE) ── S102

CONVERT DATA OF DISTANCE IMAGE (DIFFERENCE IMAGE) INTO THREE-DIMENSIONAL POINT GROUP DATA ── S103

GENERATE DATA OF 2.5D IMAGE BY MAPPING THREE-DIMENSIONAL POINT GROUP DATA ── S104

REPEAT L TIMES ── S105

APPLY CONTOUR EXTRACTION TO DATA OF 2.5D IMAGE ── S106

SET PLURALITY OF TARGET PIXELS (TARGET POINT) IN CONTOUR PORTION ── S107

CALCULATE FOCAL DISTANCES fx AND fy FROM RESPECTIVE ANGLES OF VIEW θx AND θy OF x AXIS AND y AXIS ── S108

CALCULATE DISTANCES ix AND iy OF x AXIS AND y AXIS PER PIXEL OF 2.5D IMAGE ── S109

EXECUTE PROCESSING ON ALL TARGET POINTS ── S110

EXTRACT PIXELS INCLUDED IN RECTANGLE HAVING RADII rx AND ry WITH REFERENCE TO TARGET PIXEL ON 2.5D IMAGE AS PERIPHERAL PIXELS (PERIPHERAL POINT) ── S111

```
       │
       ▼
      (1)
```

# FIG. 20

(1)

| EXECUTE PROCESSING ON ALL PERIPHERAL PIXELS | S112 |

| SPECIFY ATTRIBUTE (CONTOUR, NON-CONTOUR) OF PERIPHERAL PIXEL | S113 |

S114

CONTOUR? — YES

NO

| REGISTER z AXIS VALUE OF PERIPHERAL PIXEL TO BUFFER | S115 |

| | S116 |

| CALCULATE MINIMUM VALUE OR AVERAGE VALUE OF ABSOLUTE VALUE ON THE BASIS OF EACH z AXIS VALUE OF PERIPHERAL PIXEL (ATTRIBUTE = NON-CONTOUR) REGISTERED TO BUFFER | S117 |

| CORRECT z VALUE OF TARGET POINT ON THE BASIS OF CALCULATION RESULT | S118 |

| CORRECT VALUE OF x AXIS AND VALUE OF y AXIS OF TARGET POINT ON THE BASIS OF CORRECTION RESULT OF z AXIS | S119 |

| | S120 |

| | S121 |

| OUTPUT CORRECTED THREE-DIMENSIONAL POINT GROUP DATA | S122 |

END

# FIG. 21

EP 4 040 103 A1

# FIG. 22

COMPUTER 200

| CPU 201 | INPUT DEVICE 202 | DISPLAY 203 | COMMUNICATION DEVICE 204 | INTERFACE DEVICE 205 |

208

**RAM 206**
- ACQUISITION PROCESS 206a
- CORRECTION PROCESS 206b
- FITTING PROCESSING PROCESS 206c
- EVALUATION PROCESS 206d

**HARD DISK DEVICE 207**
- ACQUISITION PROGRAM 207a
- CORRECTION PROGRAM 207b
- FITTING PROCESSING PROGRAM 207c
- EVALUATION PROGRAM 207d

EP 4 040 103 A1

FIG. 23

EP 4 040 103 A1

# FIG. 24

EP 4 040 103 A1

# FIG. 25

**INTERNATIONAL SEARCH REPORT**

International application No.

PCT/JP2019/038979

**A. CLASSIFICATION OF SUBJECT MATTER**
Int.Cl. G01B11/00(2006.01)i

According to International Patent Classification (IPC) or to both national classification and IPC

**B. FIELDS SEARCHED**

Minimum documentation searched (classification system followed by classification symbols)
Int.Cl. G01B11/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2018/185807 A1 (FUJITSU LTD.) 11 October 2018, paragraphs [0010]-[0059] (Family: none) | 1-2, 6-7, 11-12 |
| A | | 3-5, 8-10, 13-15 |
| Y | JP 2014-102243 A (NIKON CORP.) 05 June 2014, paragraphs [0023]-[0109] (Family: none) | 1-2, 6-7, 11-12 |
| A | | 3-5, 8-10, 13-15 |

☐ Further documents are listed in the continuation of Box C.  ☐ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 24 October 2019 (24.10.2019) | 05 November 2019 (05.11.2019) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019087404 A
- JP 2012079251 A